# EUROPÄISCHE PATENTANMELDUNG

(11) **EP 1 403 849 A2**
(43) Veröffentlichungstag der Anmeldung: **31.03.2004**
(21) Anmeldenummer: 03019032.6
(22) Anmeldetag: 22.08.2003
(51) Int. Cl.: G10K 1/26, B62J 3/00

(54) **Fingerklingel**

(30) Priorität: 24.09.2002 DE 20214687 U
(71) Anmelder: elasto form KG, 91217 Hersbruck (DE)
(72) Erfinder: Sperber, Gerhard, 91217 Hersbruck (DE)
(74) Vertreter: Stippl, Hubert, Dipl.-Ing.

(57) **Zusammenfassung**

Fingerklingel mit einem Klingelkörper (2), einer Basis (3) im wesentlichen aus Kunststoff, die den Klingelkörper (2) trägt, sowie einem mit dem Finger bedienbaren Klöppel (4), wobei ein Band (5) mit der Basis (3) zur Befestigung der Fingerklingel (1) verbunden ist, wobei das Band (5) aus einem flexiblen Kunststoffmaterial besteht und das Band (5) mit der Basis (3) spritzgießtechnisch verbunden oder verschweißt oder verklebt ist.

## Beschreibung

Die Erfindung betrifft eine Fingerklingel mit einem Klingelkörper, einer Basis im wesentlichen aus Kunststoff, die den Klingelkörper trägt, sowie einem mit dem Finger bedienbaren Klöppel, wobei ein Band mit der Basis zur Befestigung der Fingerklingel verbunden ist.

Es ist bereits eine Fingerklingel bekannt, die einen Klingelkörper aufweist, der auf einer Basis aus Kunststoff angeordnet ist. Ferner ist ein Klöppel vorgesehen, der auf einem seitlich abstehenden Arm der Basis angeordnet ist. Der Klöppel ist über eine Feder mit dem Arm verbunden und kann mit einem Finger betätigt werden, so daß der Klöppel an den Klingelkörper anschlägt. Ferner ist die Basis mit einem Band versehen, welches z. B. um den Zeigefinger oder eine Lenkstange eines Fahrrades herumgelegt werden kann und mittels eines geeigneten Befestigungsmittels gesichert werden kann. Der Klöppel ist dabei in einfacher Weise mit dem Daumen betätigbar. Bei dem Band handelt es sich um ein textilartiges Material. Das Band ist zudem zweilagig ausgebildet und weist in einer Lage vorgefertigte Schlitze auf, welche über Vorsprünge geschoben werden, die an der Unterseite der Basis angespritzt sind. Das Band ist an der Unterseite des eingeschobenen Vorsprungs mit diesem vernäht, um damit eine unlösbare Fixierung des Bandes an dem jeweiligen Vorsprung zu gewährleisten.

Diese bekannte Konstruktion ist hinsichtlich der hierfür erforderlichen Arbeitsschritte aufwendig und demzufolge kostenintensiv, insbesondere auch deshalb, weil es sich hierbei um einen niedrigpreisigen, in hohen Stückzahlen vertriebenen Artikel handelt.

Die Aufgabe der vorliegenden Erfindung besteht darin, die Konstruktion zu vereinfachen und damit die Herstellungskosten zu senken.

Diese Aufgabe wird durch die gesamte Lehre des Anspruchs 1 gelöst. Vorteilhafte Weiterbildungen der Erfindung ergeben sich aus den Unteransprüchen 2 bis 17.

Erfindungsgemäß besteht das Band aus einem flexiblem Kunststoffmaterial und ist mit der Basis spritzgießtechnisch verbunden. Damit wird in einem einzigen Arbeitsschritt, nämlich dem Spritzgießverfahren, ohne eine weitere, per Hand durchzuführende Montage oder dgl. eine dauerhafte Verbindung zwischen der Basis und dem Band geschaffen. Dadurch reduzieren sich die Herstellungskosten erheblich. Neben diesen Vorteil hinsichtlich der Herstellung hat die Erfindung auch einen Gebrauchsvorteil insoweit, als das Kunststoffband im Gegensatz zu textilartigen Bändern sich nicht mit Feuchtigkeit vollsaugen kann. Außerdem ist das Kunststoffband einfach z. B. mit Wasser zu reinigen.

Alternativ ist erfindungsgemäß das Band mit der Basis verschweißt oder verklebt. Auch mittels des Schweiß- oder Klebeverfahrens entsteht eine feste und dauerhafte Verbindung von Band und Basis. Das Band kann mit der Basis heißverschweißt oder ultraschallverschweißt sein.

Insbesondere ist das Band mit der Basis mittels des Zweikomponenten-Spritzgießverfahrens verbunden. Dabei wird vorzugsweise zuerst die Basis gespritzt und anschließend oder noch während des Formfüllvorgangs der ersten Formmasse wird das Band ein- bzw. angespritzt. Mittels dieses Verfahrens sind die Basis und das flexible Band sicher und dauerhaft miteinander verbunden. Die Basis besteht dabei aus einem relativ unflexiblen Kunststoffmaterial und gewährleistet so die notwendige Stabilität und Festigkeit. Mit dem Zweikomponenten-Spritzgießverfahren können die unterschiedlichen Kunststoffmaterialien optimal miteinander verbunden werden.

Zweckmäßigerweise kann die Basis eine Bodenplatte und einen Aufsatz umfassen, wobei das Band mit der Bodenplatte verbunden ist. So können Bodenplatte und Band in einem Fertigungvorgang hergestellt werden und anschließend der Aufsatz in einfacher Weise auf die Bodenplatte aufgesteckt werden. An die Bodenplatte kann ein hohler Vorsprung angeordnet sein, in welchen ein Stift zur Befestigung des Klingelkörpers eingesteckt wird.

Am Aufsatz der Basis, insbesondere an einem zeitlich abstehenden Arm des Aufsatzes bzw. der Basis kann der Klöppel angeordnet sein. Der Klöppel kann dabei wie beim Stand der Technik über eine Feder mit dem Aufsatz bzw. dem zeitlich abstehenden Arm verbunden sein und ist dadurch beweglich.

Auf dem Band können Befestigungsmittel zum Umlegen und Befestigen des Bandes z. B. an einem Finger oder der Lenkstange angeordnet sein. Als Befestigungsmittel kann z. B. ein Klettverschluß vorgesehen sein, der nachträglich auf das Kunststoffband aufgebracht werden kann. Dabei kann jeweils ein Klettbereich an einem Ende des Kunststoffbandes befestigt, z. B. aufgenäht sein.

Als Befestigungsmittel kann vorteilhafterweise auch an einem Endbereich des Bandes ein Vorsprung vorgesehen sein, der in eine Öffnung am anderen Endbereich des Bandes eingreift bzw. einschnappt. Der Vorsprung und die Öffnung können zweckmäßigerweise bereits im oben geschilderten Zweikomponenten-Spritzgießverfahren mit ein- bzw. angeformt werden. Dies führt zu einer weiteren Reduzierung der Herstellungskosten.

Um eine innige, stabile und dauerhafte Verbindung zwischen Band und Basis zu schaffen, kann die Bodenplatte mindestens eine Ausnehmung aufweisen, in welche sich zumindest teilweise der flexible Kunststoff des Bandes insbesondere in Form eines Vorsprungs hineinerstreckt. Beim Schweißverfahren können beispielsweise zunächst die Vorsprünge in die dazugehörigen Ausnehmungen gesteckt und anschließend miteinander verschweißt werden. Bei der Klebeverbindung ergibt sich aufgrund der Vorsprünge bzw. Ausnehmungen eine wesentlich größere Klebefläche und damit bessere Klebfestigkeit. Vor allem bei einer Scherbeanspruchung der Verbindung von Bodenplatte und Band ist damit eine sichere Verbindung gewährleistet. Es wird aber auch die Verbindungskraft in anderen Richtungen, z. B. bei Zugbeanspruchung erhöht.

Vorteilhafterweise können mehrere Ausnehmungen vorgesehen sein, die gleichmäßig, insbesondere kreisförmig in der Bodenplatte verteilt sind. Die Ausnehmungen können dabei um den oben erwähnten, hohlen Vorsprung herum angeordnet sein.

Die Ausnehmungen selbst können kreisförmig sein, womit eine gleichmäßige Ausfüllung der Ausnehmungen erzielt wird.

Ferner kann das Band einen vorstehenden Bereich aufweisen, der an die Bodenplatte angeformt ist. Diese konstruktive Ausgestaltung trägt zu einem stabilen Aufbau im Bereich des Verbindungsbereichs von Bodenplatte und Band bei. Der vorstehende Bereich kann dabei in die oben erwähnten Vorsprünge, die in den Ausnehmungen der Bodenplatte vorgesehen sind, übergehen.

Das Band kann mit Einprägungen, insbesondere mit Werbeeinprägungen, versehen sein, die bereits ebenfalls während des Spriztgießverfahrens eingeformt werden können. Ein zusätzlicher Fertigungsschritt ist demnach nicht erforderlich. Alternativ oder zusätzlich kann das Band auch mit einem Werbeaufdruck versehen sein. Damit kann die Fingerklingel als Werbeartikel relativ kostengünstig hergestellt werden.

Das flexible Kunststoffmaterial des Bandes kann eine Elastomer sein. Dabei wird vorteilhafterweise eine Elastomer ausgewählt, das sich mit dem Kunststoffmaterial (z. B. einem Thermoplasten) der Basis optimal verbindet.

Die erfindungsgemäße Fingerklingel ermöglicht es, daß das Band unterschiedlich eingefärbt sein kann. Dabei kann das Band in Abstimmung mit der Farbe des Klingelkörpers entweder übereinstimmen, farblich abgestuft oder kontrastierend aufgeführt sein. Darüber hinaus ist die Herstellung des Kunststoffbandes in den gewünschten Farben wirtschaftlich sehr viel einfacher zu erzielen als z. B. mit textilartigen Materialien. Die Wahl der Farbe des Bandes kann unmittelbar beim Hersteller entschieden werden, d. h. der Hersteller ist nicht auf einen Zulieferer von textilartigen, farbigen Bändern angewiesen. Eine mit der Herstellung von Spritzgußteilen befaßt Firma kann demzufolge das Band selbst einfärben und somit die Herstellung und Sortimentierung flexibel gestalten. Ferner ist es möglich, daß z. B. Glitzerpartikel in das Kunststoffmaterial untergemischt werden und somit dem Band ein besonders attraktives und auffälliges Aussehen verliehen wird.

Die Erfindung ist anhand von vorteilhaften Ausführungsbeispielen in Zeichnungsfiguren näher erläutert. Diese zeigen:
- Fig. 1: eine Seitenansicht auf die Fingerklingel;
- Fig.2: eine Explosionsdarstellung der einzelnen Bestandteile der Fingerklingel sowie
- Fig. 3: eine Draufsicht auf die mit dem Band verbundene Basis.

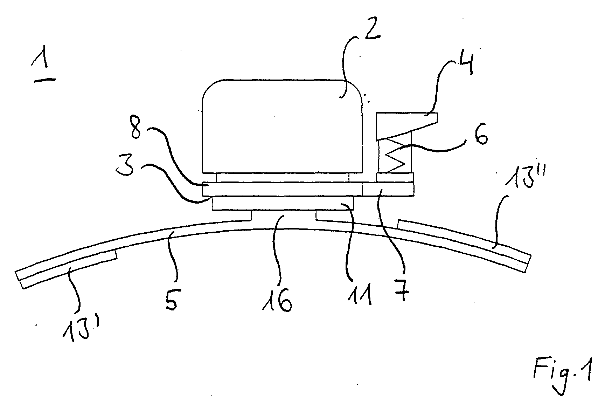

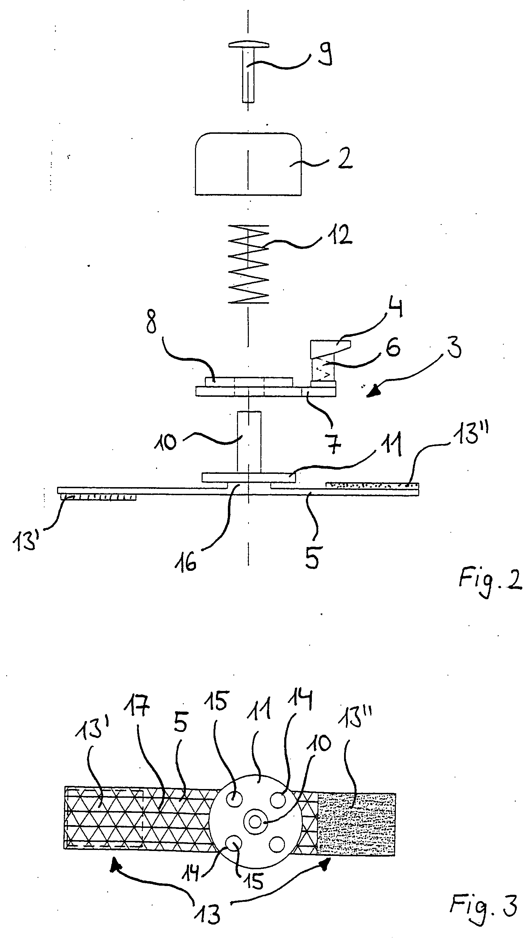

Die Fingerklingel in ihrer Gesamtheit ist mit Bezugsziffer 1 versehen. Wie in den Figuren 1 und 2 dargestellt ist, umfaßt die Fingerklingel 1 eine Klingelkörper 2, eine Basis 3 aus Kunststoff, die den Klingelkörper 2 trägt, sowie einen mit dem Finger in Pfeilrichtung bedienbaren Klöppel 4. Der Klöppel 4 ist mittels einer Feder 6 an einem seitlich abstehenden Arm 7 eines Aufsatzes 8 der Basis 3 verbunden und kann auf diese Weise einfach betätigt werden, wobei in Folge der Federwirkung beim Loslassen des Klöppels 4 dieser gegen den Klingelkörper 2 schlägt. Der Klingelkörper 2 ist mittels eines Stiftes 9, der in einen hohlen Vorsprung 10 an einer Bodenplatte 11 der Basis 3 eingreift, befestigt. Damit eine gewisse Schwingung des Klingelkörpers 2 sichergestellt ist, befindet sich um den Stift 9 eine Feder 12, auf deren oberen Ende der Klingelkörper 2 aufliegt. Ferner ist ein Band 5 mit der Basis 3 zur Befestigung der Fingerklingel 1 z. B. am Finger oder an einer Lenkstange eines Fahrrades verbunden.

Das Band 5 besteht aus einem flexiblem Kunststoffmaterial und ist mit der Basis 3 spritzgießtechnisch verbunden. Eine gesonderte Montage vom Band 5 und Basis 3 ist demnach nicht erforderlich. Die Herstellung des Bandes 5, der Basis 3 sowie deren Verbindung erfolgt also in einem Fertigungsschritt, was mit einer entsprechenden Reduzierung der Herstellungskosten verbunden ist.

Es ist aber auch möglich, daß das Band 5 mit der Basis 3 verschweißt, z. B. heißoder ultraschallverschweißt, oder verklebt ist.

Das Band 5 ist im Ausführungsbeispiel mit der Basis 3 mittels der Zweikomponenten-Spritzgießverfahrens verbunden, welches eine unterschiedliche Materialauswahl von Basis 3 und Band 5 ermöglicht. Die Basis 3 kann aus einen relativ starren Kunststoffmaterial bestehen, während das Band 5 aus einem flexiblem Kunststoffmaterial besteht, wobei die beiden Bestandteile auch noch unterschiedlich eingefärbt sein können.

Wie oben bereits kurz erläutert, ist die Basis 3 zweiteilig ausgebildet und umfaßt eine Bodenplatte 11 sowie einen Aufsatz 8. Das Band 5 ist dabei mit der Bodenplatte 11 verbunden. Der Aufsatz 8 der Basis 3 wird nach Herstellung der Basis 3 und des Bandes 5 lediglich noch auf den Vorsprung 10 aufgesteckt.

Auf dem Band 5 sind Befestigungsmittel zum Umlegen und Befestigen des Bandes 5 z. B. an einem Finger oder an einer Lenkstange angeordnet. Im vorliegenden Fall ist als Befestigungsmittel ein Klettverschluß 13 vorgesehen. Die einzelnen Klettbereiche 13', 13" sind im jeweiligen Endbereich des Bandes 5 aufgenäht.

Im folgenden wird die Verbindung von Basis 3 bzw. Bodenplatte 11 und Band 5 näher erläutert. Dazu wird zunächst auf Figur 3 Bezug genommen. Die Bodenplatte 11 weist vier Ausnehmungen 14 auf, in welche sich der flexible Kunststoff des Bandes 5 in Form von Vorsprüngen 15 hineinstreckt. Die Vorsprünge 15 sind dabei an die Ausnehmungen 14 angeformt und erhöhen dadurch die Verbindungsfestigkeit von Bodenplatte 11 und Band 5.

Die Ausnehmungen 14 sind dabei gleichmäßig über die Bodenplatte 11 verteilt, so daß eine stabile Verbindung in alle Richtungen gewährleistet ist. Die Ausnehmungen 14 sind kreisförmig um den Vorsprung 10 angeordnet. Die Ausnehmungen 14 selbst sind ebenfalls kreisförmig, was spritzgießtechnisch von Vorteil ist und womit eine optimale Verbindung erreicht wird.

Das Band 5 weist ferner einen vorstehenden Bereich 16 auf, der an die Bodenplatte 11 angeformt ist. Dieser vorstehende Bereich 16 verstärkt den Verbindungsbereich von der Bodenplatte 11 und dem Band 5. Der vorstehende Bereich 16 geht in die Vorsprünge 15 über bzw. ist mit diesen einteilig ausgebildet.

Das Band 5 ist mit einer Einprägung 17 versehen, die dem Band 5 ein besseres Aussehen verleiht und außerdem für eine bessere Griffigkeit sorgt. Zusätzlich oder alternativ kann auch eine Werbeeinprägung vorgesehen sein, so daß die Fingerklingel als Werbeartikel dient. Das Band 5 kann auch mit einem Werbeaufdruck versehen sein.

Das flexible Kunststoffmaterial des Bandes 5 ist ein Elastomer, welches sich durch seine gummielastischen Eigenschaften auszeichnet.

Das Band 5 kann in unterschiedlichen Farben ausgeführt sein, wobei die jeweilige Farbe in der Abstimmung mit der Farbe des Klingelkörpers 2 entweder übereinstimmen, farblich abgestuft, kontrastierend oder dergleichen sein kann.

### BEZUGSZEICHENLISTE

- 1): Fingerklingel
- 2): Klingelkörper
- 3): Basis
- 4): Klöppel
- 5): Band
- 6): Feder
- 7): Arm
- 8): Aufsatz
- 9): Stift
- 10): hohler Vorsprung
- 11): Bodenplatte
- 12): Feder
- 13): Klettverschluß
- 13', 13"): Klettbereiche
- 14): Ausnehmung
- 15): Vorsprung
- 16): vorstehender Bereich
- 17): Einprägung

## Patentansprüche

1. Fingerklingel mit einem Klingelkörper (2), einer Basis (3) im wesentlichen aus Kunststoff, die den Klingelkörper (2) trägt, sowie einem mit dem Finger bedienbaren Klöppel (4), wobei ein Band (5) mit der Basis (3) zur Befestigung der Fingerklingel (1) verbunden ist,
**dadurch gekennzeichnet, daß**
das Band (5) aus einem flexiblen Kunststoffmaterial besteht und das Band (5) mit der Basis (3) spritzgießtechnisch verbunden oder verschweißt oder verklebt ist.

2. Fingerklingel nach Anspruch 1,
**dadurch gekennzeichnet, daß**
das Band (5) mit der Basis (3) heißverschweißt oder ultraschallverschweißt ist.

3. Fingerklingel nach Anspruch 1,
**dadurch gekennzeichnet, daß**
das Band (5) mit der Basis (3) mittels des Zwei-Komponenten-Spritzgießverfahrens verbunden ist.

4. Fingerklingel nach einem der vorhergehenden Ansprüche,
**dadurch gekennzeichnet, daß**
die Basis (3) eine Bodenplatte (11) und einen Aufsatz (8) umfaßt, wobei das Band (5) mit der Bodenplatte (11) verbunden ist.

5. Fingerklingel nach einem der vorhergehenden Ansprüche,
**dadurch gekennzeichnet, daß**
am Aufsatz (8) bzw. an der Basis (3) der Klöppel (4) angeordnet ist.

6. Fingerklingel nach einem der vorhergehenden Ansprüche,
**dadurch gekennzeichnet, daß**
auf dem Band (5) Befestigungsmittel zum Umlegen und Befestigen des Bandes (5) z. B. an einem Finger angeordnet sind.

7. Fingerklingel nach Anspruch 6,
**dadurch gekennzeichnet, daß**
als Befestigungsmittel ein Klettverschluß (13) vorgesehen ist.

8. Fingerklingel nach einem der vorhergehenden Ansprüche,
**dadurch gekennzeichnet, daß**
die Bodenplatte (11) mindestens eine Ausnehmung (14) aufweist, in welche sich zumindest teilweise das flexible Kunststoffmaterial des Bandes (5) insbesondere in Form eines Vorsprungs (15) hineinerstreckt.

9. Fingerklingel nach Anspruch 8,
**dadurch gekennzeichnet, daß**
mehrere Ausnehmungen (14) vorgesehen sind, die gleichmäßig in der Bodenplatte (11) verteilt sind.

10. Fingerklingel nach einem der vorhergehenden Ansprüche 8 oder 9,
**dadurch gekennzeichnet, daß**
die Ausnehmungen (14) kreisförmig in der Bodenplatte (11) verteilt sind.

11. Fingerklingel nach einem der vorhergehenden Ansprüche 8 - 10,
**dadurch gekennzeichnet, daß**
die Ausnehmung (14) kreisförmig ist.

12. Fingerklingel nach einem der vorhergehenden Ansprüche,
**dadurch gekennzeichnet, daß**
das Band (5) einen vorstehenden Bereich (16) aufweist, der an die Bodenplatte (11) angeformt ist.

13. Fingerklingel nach Anspruch 12,
**dadurch gekennzeichnet, daß**
der vorstehende Bereich (16) in die Vorsprünge (15) übergeht.

14. Fingerklingel nach einem der vorhergehenden Ansprüche,
**dadurch gekennzeichnet, daß**
das Band (5) mit Einprägungen (17), insbesondere mit Werbeeinprägungen versehen ist.

15. Fingerklingel nach einem der vorhergehenden Ansprüche,
**dadurch gekennzeichnet, daß**
das Band (5) mit einem Werbeaufdruck versehen ist.

16. Fingerklingel nach einem der vorhergehenden Ansprüche,
**dadurch gekennzeichnet, daß**
das flexible Kunststoffmaterial ein Elastomer ist.

17. Fingerklingel nach einem der vorhergehenden Ansprüche,
**dadurch gekennzeichnet, daß**
das Band (5) beliebig eingefärbt ist.
